# EUROPÄISCHE PATENTSCHRIFT

(11) **EP 1 198 957 B1**
(45) Veröffentlichungstag und Bekanntmachung des Hinweises auf die Patenterteilung: **28.05.2003**
(21) Anmeldenummer: 99928998.6
(22) Anmeldetag: 22.07.1999
(51) Int. Cl.: H04N 7/18, H04N 9/31, G02B 27/01, A61F 2/16

(54) **Mobile Bildaufnahme, Retinaprojektion von gemäss Augenposition eines Benutzers ermittelten Bilddaten, sowie Wiedergabe von aus den ermittelten Bilddaten gewonnener Nutzinformation**
Mobile image acquisition, retinal projection of image data determined in accordance with a user's eye position, reproduction of useful information extracted from the determined image data
Acquisition mobile d'images, projection rétinale de données d'image determinées selon la position de l'oeil d'un utilisateur, reproduction d'information utile extraite des données d'image déterminées

(43) Veröffentlichungstag der Anmeldung: 24.04.2002
(73) Patentinhaber: Swisscom Mobile AG, 3050 Bern (CH)
(72) Erfinder: LAUPER, Eric, CH-3012 Bern (CH); PITTET, Corinne, CH-3007 Bern (CH)
(74) Vertreter: BOVARD AG - Patentanwälte
(86) Internationale Anmeldenummer: CH9900339
(87) Internationale Veröffentlichungsnummer: WO01008414

(56) Entgegenhaltungen:
- WO-A-94/09472
- US-A- 5 653 751

## Beschreibung

Die vorliegende Erfindung betrifft ein Verfahren und geeignete Vorrichtungen, um Nutzinformationen betreffend betrachtete Objekte zu liefern. Insbesondere betrifft die vorliegende Erfindung ein Verfahren und geeignete Vorrichtungen, um einem mobilen Benutzer Nutzinformationen betreffend von ihm betrachtete Objekte zu liefern.

Bekannte Verfahren aus dem Gebiet der Bildverarbeitung ermöglichen es, aus digitalen Bilddaten, die mittels geeigneten Bildaufnahmemitteln aufgenommen wurden, beispielsweise mittels einer digitalen Bild- oder Videokamera, oder die durch Digitalisierung aus einem analogen Bild gewonnen wurden, Objekte, die in den Bilddaten entsprechenden Bildern enthalten sind, zu erkennen und zu identifizieren. Zum Beispiel können mittels OCR (Optical Character Recognition) Schriftzeichen und daraus bestehende Texte erkannt werden. Solche bekannte Verfahren und dafür geeignete Vorrichtungen werden vorwiegend als Bestandteil festinstallierter Anlagen und Systeme eingesetzt oder können als Bestandteil mobiler Vorrichtungen, beispielsweise in einem Handscanner für die Texterfassung, durch Benutzer unter manueller Verwendung mobil eingesetzt werden. Oft ist es allerdings wünschenswert, dass mobile Benutzer Informationen betreffend von ihnen betrachtete Objekte direkt erhalten, ohne dass sie dabei separate Bildaufnahmen durchführen müssen, die nur für die Informationsgewinnung verwendet werden.

Es ist eine Aufgabe dieser Erfindung, ein neues und besseres Verfahren sowie dafür geeignete Vorrichtungen vorzuschlagen, welche es ermöglichen, einem Benutzer beim Betrachten von Objekten Nutzinformationen betreffend die von ihm betrachteten Objekte zu liefern.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung gemäß Anspruch 1 insbesondere dadurch erreicht, dass Bilddaten eines vom mobilen Benutzer betrachteten Objekts mittels vom Benutzer getragenen Bildaufnahmemitteln aufgenommen werden, dass mindestens gewisse dieser Bilddaten für den Benutzer sichtbar gemacht werden indem diesen Bilddaten entsprechende Bildsignale direkt auf die Retina des Benutzers projiziert werden, wobei die Bilddaten bevor sie sichtbar gemacht werden verarbeitet werden können, indem beispielsweise Konturen hervorgehoben oder Kontraste erhöht werden, dass aktuelle Augenpositionen des Benutzers mittels eines Augenpositionsbestimmungsmoduls bestimmt werden, dass basierend auf genannten Augenpositionen mittels eines Auswahlmoduls ein Bildsegment aus den für den Benutzer sichtbar gemachten Bilddaten bestimmt wird, dass auf dem ausgewählten Bildsegment basierende Bildsegmentdaten an eine Verarbeitungseinheit geleitet werden, welche Verarbeitungseinheit basierend auf genannten Bildsegmentdaten genannte Nutzinformationen bestimmt, und dass genannte Nutzinformationen dem Benutzer wiedergegeben werden. Der Vorteil dieses Verfahrens besteht darin, dass der Benutzer direkt Nutzinförmationen betreffend von ihm betrachtete Objekte erhält, ohne dass er dabei zusätzliche, separate Bildaufnahmen nur für den Zweck der Gewinnung von Nutzinformationen machen muss.

In einer Ausführungsvariante befindet sich die Verarbeitungseinheit in einer Zentrale und die Bildsegmentdaten werden über ein Mobilfunknetz, zum Beispiel ein GSM- oder UMTS-Netz oder ein anderes, beispielsweise satellitenbasiertes, Mobilfunknetz, an die Verarbeitungseinheit in der Zentrale geleitet. Diese Ausführungsvariante ist vor allem dann vorteilhaft, wenn die Verarbeitung der Bildsegmentdaten zur Gewinnung der Nutzinformationen sehr aufwendig ist und lokal beim Benutzer nicht effizient durchgeführt werden kann, beispielsweise weil die dazu nötige mobile Vorrichtung zu gross und schwer würde, und/oder weil die Nutzinformationen Angaben beinhalten, die lokal beim. Benutzer nicht verfügbar sind. Umgekehrt hat eine Verarbeitungseinheit, die sich in einer mobilen Vorrichtung lokal beim Benutzer befindet den Vorteil, dass in dieser Vorrichtung keine Kommunikationskomponenten vorhanden sein müssen, dass keine Abhängigkeit von der externen Zentrale besteht, und dass keine Verzögerung durch die Kommunikation mit der externen Zentrale verursacht wird.

An dieser Stelle sollte festgehalten werden, dass sich die vorliegende Erfindung neben dem erfindungsgemässen Verfahren auch auf eine entsprechende mobile Vorrichtung gemäss Anspruch 8 bezieht.

In einer Ausführungsvariante werden durch ein Texterkennungsmodul in der mobilen Vorrichtung aus dem gewählten Bildsegment Textinformationen in einer ersten Sprache herausgearbeitet und als Bildsegmentdaten an die Verarbeitungseinheit (in der mobilen Vorrichtung oder in der Zentrale) weitergeleitet, welche Verarbeitungseinheit diese Textinformationen in die Nutzinformationen mit Textinformationen in einer zweiten Sprache übersetzt. In einer alternativen Ausführungsvariante werden die Bildsegmentdaten mit den dem gewählten Bildsegment entsprechenden Bilddaten unverändert an die Zentrale übermittelt und dort durch die Verarbeitungseinheit daraus Textinformationen in einer ersten Sprache herausgearbeitet und diese Textinformationen in die Nutzinformationen mit Textinformationen in einer zweiten Sprache übersetzt. Diese Ausführungen haben den Vorteil, dass der mobile Benutzer, der sich beispielsweise in einem fremden Land befindet, von ihm betrachtete Objekte mit darauf angebrachten fremdsprachigen Textinformationen in seine Muttersprache übersetzen lassen kann, ohne dass er dabei manuell papierbasierte oder elektronische Übersetzungshilfen konsultieren muss.

In einer Ausführungsvariante identifiziert die Verarbeitungseinheit (in der mobilen Vorrichtung oder in der Zentrale) basierend auf den Bildsegmentdaten mindestens ein betrachtetes Objekt und stellt basierend auf dieser Objektidentifizierung Nutzinformationen bereit, die diesem Objekt zugeordnete Objektinformationen umfassen. Der Vorteil dieser Ausführung besteht darin, dass der mobile Benutzer, der sich beispielsweise in einem Museum oder in einer Stadt mit Sehenswürdigkeiten befindet, mit Identifizierungs- und/oder Hintergrundinformationen zu von ihm betrachteten Objekten, beispielsweise Ausstellungsgegenstände oder historische Bauten, versorgt werden kann, ohne dass er dabei manuell papierbasierte oder elektronische Informationsquellen konsultieren oder vorgeschriebene Routen einhalten muss.

In Varianten, die beispielsweise für den Benutzer wählbar sind, werden die Nutzinformationen dem Benutzer in sichtbarer oder hörbarer Form wiedergegeben. Die Wiedergabe in hörbarer Form hat insbesondere den Vorteil, dass Nutzinformationen beispielsweise auch einem sehbehinderten Benutzer verfügbar gemacht werden können, was die Einsatz- und Anwendungsmöglichkeiten des erfindungsgemässen Verfahrens und der erfindungsgemässen mobilen Vorrichtung um ein Vielfaches erweitert, da sie als Sehhilfe mit akustischer Nutzinformationswiedergabe verwendet werden können.

Nachfolgend wird eine Ausführung der vorliegenden Erfindung anhand eines Beispieles beschrieben. Das Beispiel der Ausführung wird durch folgende einzige beigelegte Figur illustriert:

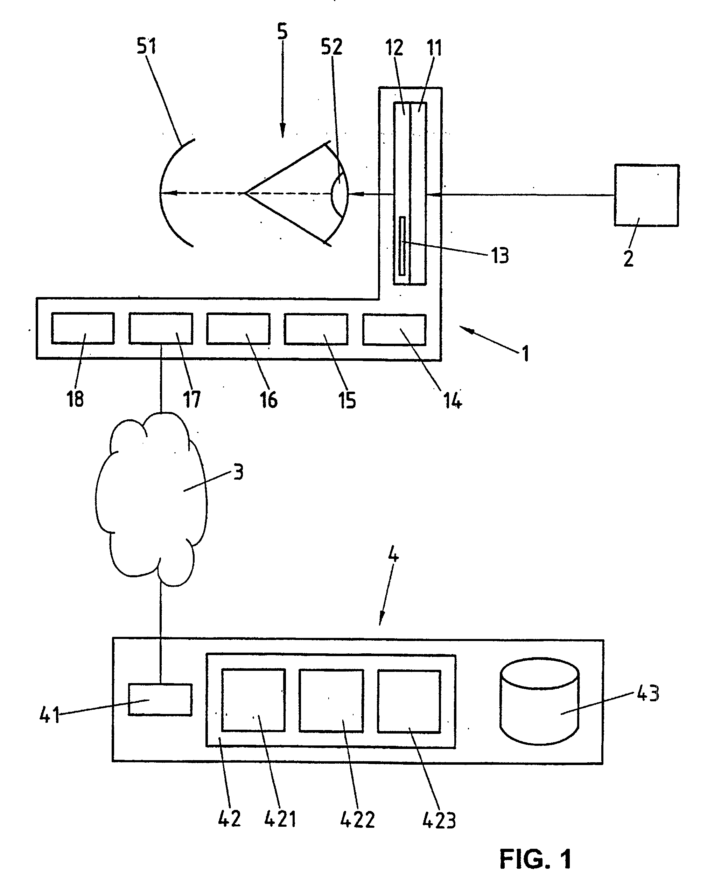

Figur 1 zeigt ein Blockdiagramm, in welchem schematisch eine Zentrale dargestellt ist, die über ein Mobilfunknetz mit einer mobilen Vorrichtung verbunden ist, welche mobile Vorrichtung eine virtuelle retinale Anzeigevorrichtung umfasst, die Bildsignale direkt auf die Retina eines Auges projiziert.

In der Figur 1 bezieht sich die Bezugsziffer 1 auf eine mobile Vorrichtung, welche eine virtuelle retinale Anzeigevorrichtung 12 umfasst, die Bilder für den Benutzer der mobilen Vorrichtung 1 sichtbar macht, indem sie entsprechende Bildsignale auf die Retina 51 des Auges 5 des Benutzers projiziert. Die Bilder sind stille oder bewegte Bilder von Objekten 2, die vom Benutzer betrachtet werden. Die Bilddaten für die Bilder werden durch geeignete Bildaufnahmemittel, beispielsweise durch eine Videokamera 11 oder durch geeignete Optikelemente 11 unter Verwendung der virtuellen retinalen Anzeigevorrichtung 12 als aufnehmender Bildscanner, aufgenommen und den Bilddaten entsprechende Bildsignale durch die virtuelle retinale Anzeigevorrichtung 12 auf die Retina 51 projiziert. Die Verwendung von mikroelektromechanischen Elementen, insbesondere mikroelektromechanische Scanner mit einem zweiachsigen Spiegel, für die Projizierung von Bildsignalen in einer direkten retinalen Anzeiigevorrichtung und/oder für die Aufnahme von von Objekten reflektiertem oder abgestrahltem Licht wird beispielsweise in der Patentschrift WO 98/13720 beschrieben. An dieser Stelle sollte erwähnt werden, dass es durchaus möglich ist die aufgenommenen Bilddaten durch geeignete Bildverarbeitungsmittel zu verändern bevor sie für den Benutzer sichtbar gemacht werden, beispielsweise können Konturen hervorgehoben, Kontraste erhöht oder andere Bildverarbeitungen vorgenommen werden.

Mindestens gewisse erste Komponenten der mobilen Vorrichtung 1, insbesondere die virtuelle retinale Anzeigevorrichtung 12 und vorzugsweise auch die Bildaufnahmemittel 11, sind in einem gemeinsamen Gehäuse integriert oder auf einem gemeinsamen Träger installiert, wobei dieses Gehäuse oder dieser Träger vorzugsweise so ausgestaltet ist, dass es/er von einem Benutzer wie eine herkömmliche Brille aufgesetzt werden kann. Zweite Komponenten, die gegebenenfalls in einem separaten weiteren Gehäuse integriert sind, sind beispielsweise über eine drahtgebundene oder über eine drahtlose Schnittstelle mit ersten Komponenten verbunden, die sich im speziell ausgestalteten Gehäuse oder auf dem speziell ausgestalteten Träger befinden.

Eine virtuelle retinale Anzeigevorrichtung (Virtual Retinal Display, VRD), welche Bildsignale direkt auf die Retina 51 eines Betrachters projizieren kann, wurde beispielsweise in den Patentschriften, WO 94/09472, WO 97/37339 und in der oben erwähnten Patentschrift WO 98/13720 beschrieben. Diese virtuellen retinalen Anzeigevorrichtungen können über eine Videoschnittstelle mit Bilddaten versorgt werden, beispielsweise in Form eines RGB-Signals, eines NTSC-Signals, eines VGA-Signals oder eines anderen formatierten farbigen oder monochromen Video- oder Grafiksignals. Der Fachmann wird verstehen, dass es vorteilhaft sein kann die in den erwähnten Patentschriften WO 94/09472 und WO 97/37339 beschriebene virtuelle retinale Anzeigevorrichtung, respektive die dort beschriebene Videoschnittstelle, so anzupassen, dass es je nach den verwendeten Bildaufnahmemitteln 11 auch andere Formate von Bilddaten effizient entgegennehmen kann. Mittels eines nicht dargestellten Schnittstellenmoduls können aufgenommene Bilddaten aber auch geeignet an die Videoschnittstelle angepasst werden, respektive erhaltene Bilddaten so umgewandelt werden, dass sie an die Videoschnittstelle angelegt und mittels der virtuellen retinalen Anzeigevorrichtung 12 für den Benutzer sichtbar gemacht werden können.

Wie in der Figur 1 schematisch dargestellt ist, umfasst die virtuelle retinale Anzeigevorrichtung 12 ein Augenpositionsbestimmungsmodul 13, welches aktuelle Augenpositionen des Benutzers beim Betrachten von Bildern bestimmen und über die oben erwähnte, oder über eine zusätzliche drahtgebundene oder drahtlose Schnittstelle an ein Auswahlmodul 14 der mobilen Vorrichtung 1 leiten kann. Ein Augenpositionsbestimmungsmodul (Eye Tracker), welches aktuelle Augenpositionen basierend auf der Position der Pupille 52 eines Benutzers bestimmt, wurde ebenfalls in der oben erwähnten Patentschrift WO 94/09472 beschrieben und kann vom Fachmann so erweitert werden, dass die bestimmte Augenposition über eine geeignete Schnittstelle für Komponenten ausserhalb der virtuellen retinalen Anzeigevorrichtung 12 verfügbar ist; je nach Ausführung können Werte für beide Augen verfügbar gemacht werden.

Das Auswahlmodul 14 der mobilen Vorrichtung 1, beispielsweise ein programmiertes Softwaremodul, das auf einem Prozessor der mobilen Vorrichtung 1 ausgeführt wird, bestimmt auf Grund der aktuellen Augenposition welcher Teil des projizierten Gesamtbildes vom Benutzer betrachtet wird und leitet daraus ein Bildsegment des projizierten Gesamtbildes ab. Die Wahl eines Bildsegments basierend auf der Augenpositionen des Benutzers, kann auf verschiedene Weise gesteuert werden. Zum Beispiel kann ein Bildsegment von vordefinierter oder variabler Grösse gewählt werden, wenn das Auswahlmodul 14 feststellt, dass der Benutzer denselben Teilbereich des Gesamtbilds während einer vordefinierten Zeitdauer betrachtet hat. In einer anderen Variante kann ein Bildsegment von vordefinierter oder variabler Grösse gewählt werden, nachdem der Benutzer mittels eines nicht dargestellten Bedienungselementes, beispielsweise eine dafür vorgesehene Taste, ein entsprechendes Signal an das Auswahlmodul 14 gegeben hat. Der Auswahlvorgang kann durch den Benutzer in einer weiteren Variante auch dadurch eingeleitet werden, dass er sein(e) Auge(n) auf einen vordefinierten Bereich, der beispielsweise wie in einer herkömmlichen grafischen Benutzeroberfläche als grafisches Bedienungselement dargestellt ist und sich vorzugsweise an einem äusseren Bildbereich befindet, positioniert und, beispielsweise nach der Anzeige einer grafisch dargestellten Rückmeldung des Auswahlmoduls 14, den gewünschten auszuwählenden Bildbereich betrachtet.

Ein solches Auswahlmodul 14 ermöglicht folglich die virtuelle retinale Anzeigevorrichtung 12 als grafische Benutzerschnittstelle einzusetzen, die vom Benutzer durch Positionierung seiner Augen gesteuert werden kann, indem das Auswahlmodul 14 mittels der virtuellen retinalen Anzeigevorrichtung 12 GUI-Objekte (Graphical User Interface) in Bildbereiche auf die Retina 51 des Benutzers projiziert, die vordefinierten Augenpositionswerten entsprechen und durch Vergleichen der aktuellen Augenpositionen mit den vordefinierten Augenpositionswerten vom Benutzer mittels Augenpositionierung eingegebene Befehle entgegennehmen kann. Das Auswahlmodul kann beispielsweise auch bekannte GUI-Methoden verwenden, um die Auswahl eines gewünschten Bildsegments zu erleichtern. Zum Beispiel kann vor der eigentlichen Auswahl eines Bildsegments das Bildsegment, das vom Auswahlmodul als auszuwählendes Bildsegment angenommen wurde, durch eine rechteckförmige Hilfslinie angezeigt und vom Benutzer mittels herkömmlicher Bedienungselemente oder mittels der erwähnten grafischen Bedienungselemente als ausgewähltes Bildsegment aktiviert werden. Auf diese Weise kann auch die Grösse des auszuwählenden Bildsegments und gegebenenfalls die auf das ausgewählte Bildsegment anzuwendende Verarbeitungsfunktion gewählt werden.

Die Möglichkeiten, ein ausgewähltes Bildsegment weiterzuverarbeiten, sind grenzenlos und in den folgenden Abschnitten werden nur zwei Anwendungsbeispiele, nämlich die Übersetzung von auf dem betrachteten Objekt 2 angebrachten Textinformationen und die Erkennung und Identifizierung von Objekten 2, näher beschrieben. Es soll hier festgehalten werden, dass die mobile Vorrichtung 1, respektive das beschriebene Verfahren, so ausgeführt werden kann, dass nur jeweils eine vordefinierte Weiterverarbeitungsfunktion verfügbar ist oder dass verschiedene durch den Benutzer selektierbare Weiterverarbeitungsfunktionen verfügbar sein können.

Im ersten Anwendungsbeispiel funktioniert die mobile Vorrichtung 1 für den Benutzer wie eine Übersetzungsbrille, das heisst, wenn das ausgewählte Bildsegment Textinformationen in einer ersten Sprache enthält, können dem Benutzer Nutzinformationen mit Textinformationen in einer übersetzten zweiten Sprache geliefert werden. Zu diesem Zweck wird ein ausgewähltes Bildsegment, beispielsweise in der Form einer Bitmap oder in geeigneter komprimierter Form, einem Texterkennungsmodul 15, 421 zugeführt, beispielsweise ein hardware- oder softwaremässiges OCR-Verfahren (Optical Character Recognition), welches im ausgewählten Bildsegment enthaltene Buchstaben, respektive Schriftsymbole, erkennt und die daraus zusammengesetzte Textinformation, beispielsweise in Form einer Zeichenkette, erstellt und in entsprechenden Bildsegmentdaten zur Übersetzung an eine entsprechende Verarbeitungseinheit 16, respektive ein Übersetzungsmodul 422 (der Verarbeitungseinheit 42), weiterleitet, wobei die Verarbeitungseinheit 16, respektive das Übersetzungsmodul 422, beispielsweise als programmiertes Softwaremodul mit Zugang zu nicht dargestellten Übersetzungstabellen ausgeführt wird. Je nach Ausführungsvariante sind sowohl das Texterkennungsmodul 15 als auch die Verarbeitungseinheit 16 ein Teil der mobilen Vorrichtung 1, oder nur das Texterkennungsmodul 15 ist Teil der mobilen Vorrichtung 1, während sich die Verarbeitungseinheit 42 mit dem Übersetzungsmodul 422 in einer Zentrale 4 befindet oder sowohl das Texterkennungsmodul 421 als auch die Verarbeitungseinheit 42 mit dem Übersetzungsmodul 422 befinden sich in der Zentrale 4. Für Ausführungsvarianten, in denen Bildsegmentdaten zur Weiterverarbeitung an entsprechende Module in der Zentrale 4 weitergeleitet werden, umfasst die mobile Vorrichtung 1 ein Kommunikationsmodul 17, welches die nötigen Hard- und Softwarekomponenten umfasst, um über ein Mobilfunknetz 3 mit der Zentrale 4 zu kommunizieren. Das Mobilfunknetz 3 ist beispielsweise ein GSModer UMTS-Netz oder ein anderes, beispielsweise satellitenbasiertes, Mobilfunknetz, über welches die mobile Vorrichtung 1 mit der Zentrale 4, beispielsweise unter Zuhilfenahme von SMS-Meldungen (Short Message Services), USSD-Meldungen (Unstructured Supplementary Services Data), GPRS-Diensten (Generalized Packet Radio Service) oder gemäss einem geeigneten Protokoll über den Nutzkanal Daten austauschen kann.

Die Zentrale 4 basiert beispielsweise auf einem handelsüblichen Kommunikationsserver, der über ein Kommunikationsmodul 41 über die nötigen Hard- und Softwarekomponenten verfügt, um über das Mobilfunknetz 3 mit der mobilen Vorrichtung 1 zu kommunizieren. Die Zentrale 4 ist direkt oder über geeignete Netzwerkelemente, beispielsweise eine Mobile Switching Station (MSC), mit dem Mobilfunknetz 3 verbunden und umfasst beispielsweise eine Datenbank 43, die auf dem selben oder einem separaten Computer implementiert ist und die oben angeführten Übersetzungstabellen und/oder Tabellen mit Objektidentifizierungsdaten und zugeordneten Objektinformationen enthält.

Die Objektinformationen werden im zweiten Anwendungsbeispiel benötigt, in welchem ein ausgewähltes Bildsegment, beispielsweise in der Form einer Bitmap oder in geeigneter komprimierter Form, als Bildsegmentdaten der Verarbeitungseinheit 16 zugeführt, respektive über das Mobilfunknetz 3 an das Objektidentifizierungsmodul 423 (in der Verarbeitungseinheit 42) der Zentrale 4 weitergeleitet. Beispielsweise mittels geeigneten programmierten Softwarefunktionen werden in der Verarbeitungseinheit 16, respektive im Objektidentifizierungsmodul 423, aus den erhaltenen Bildsegmentdaten darin enthaltene Bilder von Objekten 2 herausgearbeitet und beispielsweise das in Bezug auf das Bildsegment zentralste oder grösste Objekt mit Hilfe der erwähnten Objektidentifizierungsdaten, die in der Datenbank 43, respektive in lokalen Tabellen in der mobilen Vorrichtung 1, gespeichert sind, identifiziert. Auf Grund der erhaltenen Objektidentifizierung werden dann der Datenbank 43, respektive den entsprechenden lokalen Tabellen in der mobilen Vorrichtung 1, zugeordnete Objektinformationen entnommen und als Nutzinformationen bereitgestellt. Die Einsatzmöglichkeiten einer solchen "Objektinformationsbrille" sind nahezu unbegrenzt, Objektinformationen sind beispielsweise Hintergrundinformationen betreffend Ausstellungsgegenstände in einem Museum oder historische Bauten und Sehenswürdigkeiten in einer Stadt, wobei der Vorteil der "Objektinformationsbrille" darin besteht, dass der mobile Benutzer sich nicht an eine vorgeschriebene Route halten muss und nicht manuell herkömmliche, papierbasierte oder elektronische Informationsquellen zu konsultieren braucht.

Die von der Verarbeitungseinheit 16, 42 bereitgestellten Nutzinformationen, beispielsweise übersetzte Textinformationen oder Objektinformationen, werden an ein Wiedergabemodul 18 in der mobilen Vorrichtung 1 weitergeleitet, wobei dies von der Verarbeitungseinheit 42 in der Zentrale 4 mittels dem Kommunikationsmodul 41, über das Mobilfunknetz 3 und das Kommunikationsmodul 17 erfolgt. Das Wiedergabemodul 18 umfasst die nötigen Hardwareund Softwarekomponenten, um die erhaltenen Nutzinformationen dem Benutzer, beispielsweise vom Benutzer wählbar, über die virtuelle retinale Anzeigevorrichtung 12 sichtbar oder, beispielsweise unter Zuhilfenahme eines Sprachsynthesemoduls, über nicht dargestellte akustische Wandler, beispielsweise Kopfhörer oder Lautsprecher, hörbar zu machen. Die Wiedergabe in hörbarer Form hat insbesondere den Vorteil, dass Nutzinformationen beispielsweise auch einem sehbehinderten Benutzer verfügbar gemacht werden können, was die Einsatz- und Anwendungsmöglichkeiten des erfindungsgemässen Verfahrens und der erfindungsgemässen mobilen Vorrichtung 1 um ein Vielfaches erweitert, da sie als Sehhilfe mit akustischer Nutzinformationswiedergabe verwendet werden können.

In einer Ausführungsvariante setzt sich die 'mobile Vorrichtung 1 zusammen aus dem oben erwähnten speziell ausgestalteten Gehäuse oder dem speziell ausgestalteten Träger, in welchem, respektive auf welchem, sich mindestens die virtuelle retinale Anzeigevorrichtung 12 (mit dem Augenpositionsbestimmungsmodul 13) und die Bildaufnahmemittel 11 befinden, sowie aus einem erweiterten herkömmlichen mobilen Kommunikationsendgerät, beispielsweise ein Mobilfunktelefon oder ein kommunikationsfähiger Lap- oder Palmtop-Computer, zusammen, welches Kommunikationsendgerät über eine erwähnte Schnittstelle mit Komponenten im speziell ausgestalteten Gehäuse, respektive auf dem speziell ausgestalteten Träger, verbunden ist. Das mobile Kommunikationsendgerät übernimmt dabei die Rolle des Kommunikationsmoduls 17, wobei das Auswahlmodul 14 sowie gegebenenfalls weitere Module, beispielsweise das Texterkennungsmodul 15, die Verarbeitungseinheit 16 und Softwarekomponenten des Wiedergabemoduls 18, als programmierte Softwaremodule in einem Speicher des Kommunikationsendgeräts gespeichert sind und auf einem Prozessor des Kommunikationsendgeräts ausgeführt werden, beispielsweise ein Speicher und ein Prozessor auf einer Chipkarte des Kommunikationsendgeräts. Diese Chipkarte, beispielsweise eine SIM-Karte (Subscriber Identification Module), kann gegebenenfalls auch die erwähnten Übersetzungstabellen und Objektinformationen sowie benutzerspezifische Angaben, wie beispielsweise die gewünschte Übersetzungszielsprache, enthalten.

In einer anderen, mit der Zentrale kooperierenden Ausführungsvariante umfassen die Komponenten im erwähnten speziell ausgestalteten Gehäuse, respektive auf dem speziell ausgestalteten Träger, neben der virtuellen retinalen Anzeigevorrichtung 12 (mit dem Augenpositionsbestimmungsmodul 13) und den Bildaufnahmemitteln 11 auch das Auswahlmodul 14, das Kommunikationsmodul 17, das Wiedergabemodul 18 sowie einen Prozessor und Speicher zur Ausführung der Softwaremodule.

Eine rein lokal operierende mobile Vorrichtung 1 umfasst im erwähnten speziell ausgestalteten Gehäuse, respektive auf dem speziell ausgestalteten Träger, neben der virtuellen retinalen Anzeigevorrichtung 12 (mit dem Augenpositionsbestimmungsmodul 13) und den Bildaufnahmemitteln 11 das Auswahlmodul 14, das Texterkennungsmodul 15, die Verarbeitungseinheit 16, das Wiedergabemodul 18 sowie einen Prozessor und Speicher zur Ausführung der Softwaremodule, respektive zur Speicherung von Übersetzungstabellen und/oder Objektinformationen.

An dieser Stelle sollte zudem erwähnt werden, dass es durchaus auch möglich ist, die Bildaufnahmemittel 11, insbesondere eine Videokamera, so in die mobile Vorrichtung 1 zu integrieren, das sie vom Benutzer, beispielsweise manuell, in eine beliebige Richtung gerichtet werden kann, so dass insbesondere auch Objekte 2 betrachtet werden können, die nicht in der normalen Blickrichtung des Benutzers liegen, beispielsweise Objekte 2, die sich hinter seinem Rücken befinden oder nur durch eine kleine Öffnung in einem Sehhindemis betrachtet werden können.

Die mobile Vorrichtung 1 kann zudem mit Positionsbestimmungsmitteln erweitert werden, beispielsweise satellitenbasierte Positionsbestimmungsmittel, zum Beispiel basierend auf dem Global Positioning System (GPS), oder terrestrische Positionsbestimmungsmittel (Terrestrial Positioning System, TPS), so dass der Kontext zur Bestimmung von beschriebenen Nutzinformationen durch die aktuelle geografische Position des Benutzers, respektive der mobilen Vorrichtung 1, beeinflusst (eingeschränkt) werden kann.

Einem interessierten Benutzer können vollständige beschriebene mobile Vorrichtungen 1 verkauft oder vermietet werden. Es kann wirtschaftlich auch interessant sein, Ausbausätze zu verkaufen, die die nötigen Komponenten zum Ausbau eines herkömmlichen Kommunikationsendgeräts zu einer beschriebenen mobilen Vorrichtung 1 umfassen, welche Ausbausätze insbesondere auch einen Datenträger mit darauf gespeichertem programmiertem Auswahlmodul 14, programmierten Softwarekomponenten des Wiedergabemoduls 18, und gegebenenfalls ein programmiertes Texterkennungsmodul 15 und eine programmierte Verarbeitungseinheit 16 umfassen. Interessierten Betreibern können beschriebene Zentralen 4 unter Lizenz angeboten werden oder Datenträger verkauft werden, die ein programmiertes Kommunikationsmodul 41 und eine Verarbeitungseinheit 42, beispielsweise mit einem programmierten Texterkennungsmodul 421, einem programmierten Übersetzungsmodul 422 und einem programmierten Objektidentifizierungsmodul 423, sowie eine Datenbank 43 enthalten, um einen herkömmlichen Kommunikationsserver, der die vom Kommunikationsmodul 41 benötigten Hardwarekomponenten umfasst, als beschriebene Zentrale 4 zu betreiben. Ein Betreiber einer Zentrale 4 kann dem Benutzer beispielsweise für jede Übersetzung und für jede Objektinformationsanfrage einen Geldbetrag belasten, wobei der Benutzer zu diesem Zweck durch eine Benutzeridentifizierung, beispielsweise eine IMSI (International Mobile Subscriber Identity) oder einem IDUI (International Debit User Identifier), ausgewiesen wird, die beispielsweise bei jeder Anfrage an die Zentrale 4 mitgeliefert wird.

## Patentansprüche

1. Verfahren um einem mobilen Benutzer Nutzinformationen betreffend von ihm betrachtete Objekte (2) zu liefern, welche Nutzinformationen durch Verarbeitung von Bilddaten eines genannten Objekts (2) gewonnen werden, **dadurch gekennzeichnet,**
**dass** die genannten Bilddaten des genannten Objekts (2) mittels vom Benutzer getragenen Bildaufnahmemitteln (11) aufgenommen werden,
**dass** mindestens gewisse der genannten Bilddaten für den Benutzer sichtbar gemacht werden, indem diesen genannten Bilddaten entsprechende Bildsignale direkt auf die Retina (51) des Benutzers projiziert werden,
**dass** aktuelle Augenpositionen des Benutzers mittels eines Augenpositionsbestimmungsmoduls (13) bestimmt werden,
**dass** basierend auf genannten Augenpositionen mittels eines Auswahlmoduls (14) ein Bildsegment aus den für den Benutzer sichtbar gemachten Bilddaten bestimmt wird,
**dass** auf dem Bildsegment basierende Bildsegmentdaten an eine Verarbeitungseinheit (16, 42) geleitet werden, welche Verarbeitungseinheit (16, 42) basierend auf genannten Bildsegmentdaten genannte Nutzinformationen bestimmt, und
**dass** genannte Nutzinformationen dem Benutzer wiedergegeben werden.

2. Verfahren gemäss Anspruch 1, **dadurch gekennzeichnet, dass** sich genannte Verarbeitungseinheit (42) in einer Zentrale (4) befindet und dass genannte Bildsegmentdaten über ein Mobilfunknetz (3) an genannte Verarbeitungseinheit (42) geleitet werden.

3. Verfahren gemäss einem der Ansprüche 1 oder 2, **dadurch gekennzeichnet, dass** genannte Bildsegmentdaten aus dem genannten Bildsegment herausgearbeitete Textinformationen in einer ersten Sprache umfassen und dass genannte Verarbeitungseinheit (16, 42) diese Textinformationen in genannte Nutzinformationen mit Textinformationen in einer zweite Sprache übersetzt.

4. Verfahren gemäss Anspruch 2, **dadurch gekennzeichnet, dass** genannte Bildsegmentdaten die dem genannten Bildsegment entsprechenden Bilddaten umfassen und dass genannte Verarbeitungseinheit (42) Textinformationen in einer ersten Sprache aus dem genannten Bildsegment herausarbeitet und diese Textinformationen in genannte Nutzinformationen mit Textinformationen einer zweiten Sprache übersetzt.

5. Verfahren gemäss einem der Ansprüche 1 oder 2, **dadurch gekennzeichnet, dass** genannte Verarbeitungseinheit (16, 42) basierend auf genannten Bildsegmentdaten mindestens ein genanntes Objekt (2) identifiziert und dass genannte Verarbeitungseinheit (16, 42) basierend auf dieser Objektidentifizierung genannte Nutzinformationen bereitstellt, welche Nutzinformationen dem genannten Objekt (2) zugeordnete Objektinformationen umfassen.

6. Verfahren gemäss einem der Ansprüche 1 bis 5, **dadurch gekennzeichnet, dass** mindestens gewisse genannte Nutzinformationen dem Benutzer in sichtbarer Form wiedergegeben werden.

7. Verfahren gemäss einem der Ansprüche 1 bis 6, **dadurch gekennzeichnet, dass** mindestens gewisse genannte Nutzinformationen dem Benutzer in hörbarer Form wiedergegeben werden.

8. Mobile Vorrichtung (1), die ihrem Benutzer Nutzinformationen betreffend von ihm betrachtete Objekte (2) liefert, welche Nutzinformationen durch Verarbeitung von Bilddaten eines genannten Objekts (2) gewonnen werden, **dadurch gekennzeichnet,**
**dass** die Vorrichtung (1) Bildaufnahmemittel (11) umfasst, um die genannten Bilddaten des genannten Objekts (2) aufzunehmen,
**dass** die Vorrichtung (1) eine virtuelle retinale Anzeigevorrichtung (12) umfasst, um mindestens gewisse der genannten Bilddaten für den Benutzer sichtbar zu machen, wobei diesen genannten Bilddaten entsprechende Bildsignale direkt auf die Retina (51) des Benutzers projiziert werden,
**dass** die genannte virtuelle retinale Anzeigevorrichtung (12) ein Augenpositionsbestimmungsmodul (13) umfasst, welches aktuelle Augenpositionen des Benutzers bestimmt,
**dass** die Vorrichtung (1) ein Auswahlmodul (14) umfasst, welches basierend auf genannten Augenpositionen ein Bildsegment aus den für den Benutzer sichtbar gemachten Bilddaten bestimmt, wobei das Auswahlmodul (14) auf dem Bildsegment basierende Bildsegmentdaten an eine Verarbeitungseinheit (16, 42) weiterleitet, welche Verarbeitungseinheit (16, 42) basierend auf genannten Bildsegmentdaten genannte Nutzinformationen bestimmt, und
**dass** die Vorrichtung (1) ein Wiedergabemodul (18) umfasst, um genannte Nutzinformationen dem Benutzer wiederzugeben.

9. Vorrichtung (1) gemäss Anspruch 8, **dadurch gekennzeichnet, dass** die Vorrichtung (1) ein Texterkennungsmodul (15) umfasst, welches Texterkennungsmodul (15) aus dem genannten Bildsegment Bildsegmentdaten mit Textinformationen in einer ersten Sprache herausarbeitet.

10. Vorrichtung (1) gemäss Anspruch 9, **dadurch gekennzeichnet, dass** die Vorrichtung (1) genannte Verarbeitungseinheit (16) umfasst, welche Verarbeitungseinheit (16) genannte Textinformationen in genannte Nutzinformationen mit Textinformationen in einer zweiten Sprache übersetzt.

11. Vorrichtung (1) gemäss einem der Ansprüche 8 oder 9, **dadurch gekennzeichnet, dass** die Vorrichtung (1) ein Kommunikationsmodul (17) umfasst, um genannte Bildsegmentdaten über ein Mobilfunknetz (3) an eine genannte Verarbeitungseinheit (42) in einer Zentrale (4) weiterzuleiten und um durch die genannte Verarbeitungseinheit (42) herausgearbeitete Nutzinformationen über das Mobilfunknetz (3) entgegenzunehmen.

12. Vorrichtung (1) gemäss Anspruch 8, **dadurch gekennzeichnet, dass** die Vorrichtung (1) genannte Verarbeitungseinheit (16) umfasst, welche Verarbeitungseinheit (16) basierend auf genannten Bildsegmentdaten mindestens ein genanntes Objekt (2) identifiziert und basierend auf dieser Objektidentifizierung genannte Nutzinformationen bereitstellt, welche Nutzinformationen dem genannten Objekt (2) zugeordnete Objektinformationen umfassen.

13. Vorrichtung (1) gemäss einem der Ansprüche 8 bis 12, **dadurch gekennzeichnet, dass** das Wiedergabemodul (18) eingerichtet ist, mindestens gewisse genannte Nutzinformationen dem Benutzer in sichtbarer Form wiederzugeben.

14. Vorrichtung (1) gemäss einem der Ansprüche 8 bis 13, **dadurch gekennzeichnet, dass** das Wiedergabemodul (18) eingerichtet ist, mindestens gewisse genannte Nutzinformationen dem Benutzer in hörbarer Form wiederzugeben.

## Claims

1. Method for supplying a mobile user with service information relating to objects (2) viewed by him, which service information is obtained through processing for a said object (2), **characterised**
**in that** the said picture data for the said object (2) are captured by means of picture capturing means (11) borne by the user,
**in that** at least certain of the said picture data are made visible to the user by picture signals corresponding to these said picture data being projected directly on the retina (51) of the user,
**in that** current eye positions of the user are determined by means of an eye position determining module (13),
**in that** on the basis of said eye positions, a picture segment is determined from the picture data made visible to the user by means of a selection module (14),
**in that** picture segment data based on the picture segment are transmitted to a processing unit (16, 42), which processing unit (16, 42) determines said service information based on said picture segment data, and
**in that** said service information are reproduced for the user.

2. Method according to claim 1, **characterised in that** said processing unit (42) is located in a central unit (4) and said picture segment data are transmitted over a mobile radio network (3) to a said processing unit (42).

3. Method according to one of the claims 1 or 2, **characterised in that** said picture segment data contain text information in a first language derived from the said picture segment and said processing unit (16, 42) translates this text information into said service information with text information in a second language.

4. Method according to claim 2, **characterised in that** said picture segment data contain the picture data corresponding to the said picture segment, and said processing unit (42) derives text information in a first language from the said picture segment and translates this text information into said service information with text information in a second language.

5. Method according to one of the claims 1 or 2, **characterised in that** said processing unit (16, 42) identifies at least one said object (2) based on said picture segment data, and said processing unit (16, 42) prepares said service information based on this object identification, which service information contains object information associated with the said object (2).

6. Method according to one of the claims 1 to 5, **characterised in that** at least certain said service information is reproduced for the user in visible form.

7. Method according to one of the claims 1 to 6, **characterised in that** at least certain said service information is reproduced for the user in audible form.

8. Mobile device (1) which supplies its user with service information relating to objects (2) viewed by him, which service information is obtained through processing of picture data for a said object, **characterised**
**in that** the device (1) includes picture capturing means (11) to capture the said picture data for the said object (2),
**in that** the device (1) includes a virtual retinal display device (12) to make at least certain of the said picture data visible to the user, picture signals corresponding to these said picture data being projected directly on the retina (51) of the user,
**in that** the said virtual retinal display device (12) includes an eye position determining module (13) that determines current eye positions of the user, and
**in that** the device (1) includes a selection module (14) that, based on said eye positions, determines a picture segment from the picture data made visible to the user, the selection module (14) forwarding picture segment data based on the picture segment to a processing unit (16, 42), which processing unit (16, 42) determines said service information based on said picture segment data, and
**in that** the device (1) includes a reproduction module (18) to reproduce said service information for the user.

9. Device (1) according to claim 8, **characterised in that** the device (1) includes a text recognition module (15), which text recognition module (15) derives picture segment data with text information in a first language from the said picture segment.

10. The device (1) according to claim 9, **characterised in that** the device (1) contains said processing unit (16), which processing unit (16) translates said text information into said service information with text information in a second language.

11. The device (1) according to one of the claims 8 or 9, **characterised in that** the device (1) includes a communications module (17) in order forward said picture segment data via a mobile radio-network (3) to a said processing unit (42) in a central unit (4) and to receive via the mobile radio network (3) service information derived by the said processing unit (42).

12. The device (1) according to claim 8, **characterised in that** the device (1) contains said processing unit (16), which processing unit (16) identifies at least one said object (2) based on said picture segment data, and prepares said service information based on this object identification, which service information contains object information associated with the said object (2).

13. The device (1) according to one of the claims 8 to 12, **characterised in that** the reproduction module is set up to reproduce at least certain said service information for the user in visible form.

14. The device (1) according to one of the claims 8 to 13, **characterised in that** the reproduction module is set up to reproduce at least certain said service information for the user in audible form.

## Revendications

1. Procédé pour fournir à un utilisateur mobile des informations utiles relatives à un objet (2) observé par lui, les informations utiles étant extraites par le traitement de données d'images d'un dit objet (2), **caractérisé**
**en ce que** lesdites données d'images dudit objet (2) sont acquises par les moyens d'acquisition d'image (11) portés par l'utilisateur,
**en ce qu'**au moins certaines desdites données d'image sont rendues visibles pour l'utilisateur dans le fait que des signaux d'images correspondants auxdites données d'image sont projetés directement sur la rétine (51) de l'utilisateur,
**en ce que** des positions actuelles de l'oeil de l'utilisateur sont déterminées au moyen d'un module de détermination (13) de la position de l'oeil,
**en ce qu'**en se basant sur lesdites positions de l'oeil, un segment d'image issu des données d'image rendues visibles pour l'utilisateur est défini au moyen d'un module de sélection (14),
**en ce que** des données de segment d'image se basant sur le segment d'image sont envoyées à une unité de traitement (16, 42), unité de traitement (16, 42) qui définit desdites informations utiles en se basant sur lesdites données de segment d'images et
**en ce que** desdites informations utiles sont reproduites à l'utilisateur.

2. Procédé selon la revendication 1, **caractérisé en ce que** ladite unité de traitement (42) se trouve dans une centrale (4) et que lesdites données de segments d'image sont transmises à ladite unité de traitement (42) par un réseau mobile de radiocommunication (3).

3. Procédé selon l'une des revendications 1 ou 2, **caractérisé en ce que** lesdites données de segments d'image comportent des informations de texte obtenues dudit segment d'image dans une première langue et **en ce que** ladite unité de traitement (16, 42) traduit ces informations textes en dites informations utiles avec des informations textes dans une seconde langue.

4. Procédé selon la revendication 2, **caractérisé en ce que** lesdites données de segments d'image comprennent les données d'images correspondant audit segment d'image et **en ce que** ladite unité de traitement (42) établit à partir dudit segment d'image des informations textes dans une première langue et traduit ces informations textes en dites informations utiles avec des informations textes d'une seconde langue.

5. Procédé selon l'une des revendications 1 ou 2, **caractérisé en ce que** ladite unité de traitement (16, 42) identifie au moins un dit objet (2) en se basant sur desdites données de segments d'image et **en ce que** ladite unité de traitement (16, 42) prépare desdites informations utiles en se basant sur cette identification d'objet, informations utiles qui comprennent des informations associées à l'objet (2).

6. Procédé selon l'une des revendications 1 à 5, **caractérisé en ce qu'**au moins certaines dites informations utiles sont reproduites à l'utilisateur sous forme visible.

7. Procédé selon l'une des revendications 1 à 6, **caractérisé en ce qu'**au moins certaines dites informations utiles sont reproduites à l'utilisateur sous forme audible.

8. Dispositif mobile (1) qui fournit à son utilisateur des informations utiles relatives à l'objet (2) qu'il observe, informations utiles qui sont extraites par traitement de données d'image d'un dit objet (2), **caractérisé en ce que** le dispositif (1) comprend des moyens d'acquisition (11) pour acquérir lesdites données d'image dudit objet (2),
**en ce que** le dispositif (1) comprend un dispositif d'affichage rétinal (12) pour rendre visible au moins certains desdites données d'image, des signaux d'image correspondants à ces dites données d'image étant projetés directement sur la rétine (51) de l'utilisateur,
**en ce que** ledit dispositif d'affichage virtuel rétinal (12) comprend un module de définition (13) de position de l'oeil, qui définit la position actuelle de l'oeil de l'utilisateur,
**en ce que** le dispositif (1) comprend un module de sélection (14) qui définit, en se basant sur desdites positions d'oeil, un segment d'image issu des données d'image rendues visible pour l'utilisateur, le module de sélection (14) transmettant des données de segment d'image se basant sur le segment d'image à une unité de traitement (16, 42), unité de traitement (16, 42) qui définit desdites informations utiles en se basant sur lesdites données de segment d'image et
**en ce que** le dispositif (1) comprend un module de reproduction (18) pour reproduire desdites informations utiles à l'utilisateur.

9. Dispositif (1) selon la revendication 8, **caractérisé en ce que** le dispositif (1) comprend un module de reconnaissance de texte (15), module de reconnaissance de texte (15) qui produit à partir dudit segment d'image des données de segment d'image avec des informations textes dans une première langue.

10. Dispositif (1) selon la revendication 8, **caractérisé en ce que** le dispositif (1) comprend une dite unité de traitement (16), unité de traitement (16) qui traduit lesdites informations textes en dites informations utiles avec des informations textes dans une seconde langue.

11. Dispositif (1) selon l'une des revendications 8 ou 9, **caractérisé en ce que** le dispositif (1) comprend un module de communication (17) pour transmettre lesdites données de segment d'image par un réseau mobile de télécommunication (3) à une dite unité de traitement (42) à une centrale (4) et pour réceptionner par le réseau mobile de télécommunication (3) les informations utiles produites par ladite unité de traitement (42).

12. Dispositif (1) selon la revendication 8, **caractérisé en ce que** le dispositif (1) comprend une dite unité de traitement (16), unité de traitement (16) qui identifie au moins un dit objet (2) en se basant sur lesdites données de segment d'image et prépare desdites informations utiles en se basant sur cette identification d'objet, informations utiles qui comprennent des informations d'objet associées audit objet (2).

13. Dispositif (1) selon l'une des revendications 8 à 12, **caractérisé en ce que** le module de reproduction (18) est configuré pour reproduire au moins certaines dites informations utiles sous forme visible à l'utilisateur.

14. Dispositif (1) selon l'une des revendications 8 à 13, **caractérisé en ce que** le module de reproduction (18) est configuré pour reproduire au moins certaines dites informations utiles sous forme audible à l'utilisateur.
